# EUROPEAN PATENT APPLICATION

(11) **EP 4 644 474 A1**
(43) Date of publication of application: **05.11.2025**
(21) Application number: 24173235.3
(22) Date of filing: 30.04.2024
(51) Int. Cl.: C08K 5/17, C09J 4/00

(54) **TWO COMPONENT (2K) CURABLE ADHESIVE COMPOSITION**

(71) Applicant: Henkel AG & Co. KGaA, 40589 Düsseldorf (DE)
(72) Inventor: Lammertz, Janik, 40215 Düsseldorf (DE); Stricker, Lucas, 40211 Düsseldorf (DE); Stapf, Stefanie, 42549 Velbert (DE); Taden, Andreas, 40597 Düsseldorf (DE); Sielaff, Patric, 42349 Wuppertal (DE); Taplan, Christian, 40225 Düsseldorf (DE)

(57) **Abstract**

A two-component (2K) curable composition comprising:
a first component comprising:
a) at least one compound having at least two (meth)acrylate groups and having a weight average molecular weight (Mw) of at most 600 Daltons; and,
optionally b) at least one ethylenically unsaturated compound which is distinct from said compound(s) of a); and,

a second component comprising:
c) at least one compound having at least one primary amine group,

wherein the two-component (2K) composition further comprises:
d) a rheology control agent comprising electrically non-conductive fillers, electrically conductive fillers or mixtures thereof; and,
further wherein the two-component (2K) composition is characterized in that the molar ratio of (meth)acrylate groups to primary amine groups is from 3:1 to 1:1.

## Description

### FIELD OF THE INVENTION

The present invention is directed to a two-component (2K) composition which, after curing, may bond substrates together and bear loads within a bonded structure. More particularly, the present invention is directed to a two-component (2K) composition comprising: a first component comprising at least one compound having at least two (meth)acrylate groups; and, a second component comprising at least one compound having at least one primary amine group.

### BACKGROUND TO THE INVENTION

Adhesive bonds and polymeric coatings are commonly used in the assembly and finishing of manufactured goods. They are used in place of mechanical fasteners, such as screws, bolts and rivets, to provide bonds with reduced machining costs and greater adaptability in the manufacturing process. Adhesive bonds distribute stresses evenly, reduce the possibility of fatigue and seal the joints from corrosive species.

Modern functional adhesives often face complex application environments and thus may need to demonstrate a plethora of properties. Polyurethane adhesives have found ubiquitous utility given their: excellent adhesion to a range of substrates; often low temperature cure; solvent-resistance when cured; water-resistance when cured; corrosion resistance; and, maintenance of adhesive properties across a range of operating temperatures. However, the art has acknowledged certain disadvantages of polyurethane adhesives, including but not limited to the sensitivity of the uncured pre-cursor materials to moisture, the sensitivity of cure time to moisture and the requirement to closely control the ratio of functional groups of the pre-cursor materials in the curing reaction. Concerns about the sustainability and toxicity of polyurethanes and / or the precursors thereof have also been raised. As such, a number of authors have sought to develop alternatives to polyurethane adhesives.

Problematically, the attainment of functional adhesive properties - such as multi-substrate adhesion, stretchability, moldability and self-healing - often requires the constituent polymers of the adhesive to possess complex structures. As a corollary to this, such polymers often require complex synthetic or preparative processes.

Recognizing this problem, the present inventors have deemed aza-Michael addition - a conjugate addition reaction of an electrophilic electron acceptor with a reactant amine as the nucleophilic electron donor-to be a promising candidate process which, whilst simple, can from complex polymer structures for adhesive applications. The aza-Michael addition reaction may be catalyzed with either basic or acidic catalytic compounds but a catalyst is often not required to accelerate the Michael addition to a practicable reaction rate: reactant amines can act as both nucleophiles and bases. Furthermore, the formation of tertiary amines during aza-Michael addition can overcome the intrinsic oxygen inhibition of acrylate free-radical polymerizations and permit the curing reaction to be performed in non-inert environments.

As an example of an aza-Michael adhesive system, US2023002653A1 (Weinelt et al.) describes a hybrid system including: a) a reaction resin based on α,β-unsaturated compounds; b) a reaction resin based on compounds that include CH-acidic methylene groups; and, c) a primary amine. The present inventors do however consider that a need exists in the art to develop an alternative adhesive composition based on said aza-Michael addition wherein the addition reaction by which the composition is cured can be performed under mild or accessible temperature conditions.

### STATEMENT OF THE INVENTION

In accordance with a first aspect of the disclosure, there is provided a two-component (2K) curable composition comprising:
a first component comprising:
   a) at least one compound having at least two (meth)acrylate groups and having a weight average molecular weight (Mw) of at most 600 Daltons; and,
      optionally b) at least one ethylenically unsaturated compound which is distinct from said compound(s) of a); and,
a second component comprising:
   c) at least one compound having at least one primary amine group,

wherein the two-component (2K) composition further comprises:
   d) a rheology control agent comprising electrically non-conductive fillers, electrically conductive fillers or mixtures thereof; and,
further wherein the two-component (2K) composition is characterized in that the molar ratio of (meth)acrylate groups to primary amine groups is from 3:1 to 1:1. For completeness, ingredient d) said rheology control agent may be disposed in the first component, the second component or both of the components of the composition.

An exemplary two-component (2K) composition comprises, based on the weight of the composition:
a first component comprising:
   from 20 to 50 wt.%, preferably from 20 to 45 wt.% of a) said at least one compound having at least two (meth)acrylate groups and having a weight average molecular weight (Mw) of at most 600 Daltons; and,
   from 0 to 10 wt.%, preferably from 0 to 5 wt.% of b) said at least one ethylenically unsaturated compounds distinct from said compound(s) of a); and,
a second component comprising:
   c) at least one compound having at least one primary amine group,

wherein the two-component (2K) composition further comprises:
   from 10 to 60 wt.%, preferably from 15 to 60 wt.% of d) a rheology control agent comprising electrically non-conductive fillers, electrically conductive fillers or mixtures thereof; and,
further wherein the two-component (2K) composition is characterized in that the molar ratio of (meth)acrylate groups to primary amine groups is 2:1 to 1:1, preferably from 1.8:1 to 1.2:1.

In an important embodiment, the two-component (2K) composition is further characterized by a stoichiometric ratio of (meth)acrylate groups to reactive amine hydrogen atoms of from 1.5:1 to 0.7:1 for example from 1.2:1 to 0.8:1. These ranges include the stochiometric ratio of (meth)acrylate groups to reactive amine hydrogen atoms of 1:1, which in itself represents a preferred ratio.

It is preferred that the or each (meth)acrylate compound of ingredient a) has a weight average molecular weight (Mw) of at most 550 Daltons, for instance at most 500 Daltons. Independently of, or additional to this molecular weight characterization, it is preferred that the or each (meth)acrylate compound of ingredient a) has a dynamic viscosity of from 1 to 400 mPa.s, preferably from 1 to 300 mPa.s, as determined at 25°C and at a shear rate of 100s⁻¹.

In an important embodiment, ingredient a) of the composition comprises or consists of at least one compound having at least two acrylate groups and having a weight average molecular weight (Mw) of at most 600 Daltons. For example, ingredient a) of the composition may comprise or consist of at least one acrylate compound having a weight average molecular weight (Mw) of at most 550 Daltons or at most 500 Daltons. Independently of, or additional to this molecular weight characterization, it is preferred that the or each acrylate compound of ingredient a) of this embodiment has a dynamic viscosity of from 1 to 400 mPa.s, preferably from 1 to 300 mPa.s, as determined at 25°C and at a shear rate of 100s⁻¹.

Good results have been obtained where ingredient a) comprises at least one compound chosen from tris(2-hydroxyethyl) isocyanurate triacrylate (THEICTA), tris(2-hydroxyethyl) isocyanurate trimethacrylate, tris(3-hydroxypropyl) isocyanurate triacrylate, tris(3-hydroxypropyl) isocyanurate trimethacrylate and mixtures thereof. That embodiment wherein ingredient a) comprises trimethylolpropane triacrylate (TMPTA) and / or pentaerythritol triacrylate (PETIA) has also provided good results.

It is preferred that the or each primary amine compound of ingredient c) has an amine hydrogen equivalent weight of at most 125 g/eq., for example of at most 100 g/eq. or at most 90 g/eq. For instance, the or each primary amine compound of ingredient c) may have an amine hydrogen equivalent weight of at most 85 g/eq., such as from 40 to 85 g/eq. In an first exemplary embodiment, ingredient c) comprises bis(4-aminocyclohexyl)methane (PACM). In a second but not mutually exclusive exemplary embodiment, ingredient c) comprises a polyoxyalkylenediamine, a polyoxyalkylenetriamine or a mixture thereof.

In accordance with a second aspect of the present disclosure, there is provided a method for bonding two substrates, said method comprising the steps of:
i) applying the composition, as defined hereinabove and in the appended claims, to the surface of a first substrate;
ii) bringing the first substrate into contact with a second substrate to interpose the composition between said first and second substrates; and,
iii) curing the interposed composition.

It is preferred in step i) that said composition is applied to the surface of the first substrate at a wet film thickness of from 10 to 500 µm. Independently of, or additional to this condition, it is preferred that said curing step iii) comprises heating the interposed composition at a temperature of from 60°C to 250°C for a duration of from 0.1 to 10 hours. The curing of the interposed composition at room temperature or at even lower temperatures is not however precluded.

The cured composition of the present disclosure demonstrates dimensional stability and efficacious physical strength and stiffness at temperatures below its glass transition temperature (T_{g}). The appended examples also demonstrate the attainment of these positive material properties at temperatures above the glass transition temperature (T_{g}) of the cured composition.

The present disclosure still further provides a bonded structure obtained according to the method as defined hereinabove and in the appended claims.

Where the aspects of the disclosure are described above as having certain embodiments, any one or more of those embodiments can be implemented in or combined with any one of the further embodiments, even if that combination is not explicitly described. Expressed differently, the described embodiments are not mutually exclusive unless stated to be so, and permutations thereof remain within the scope of this disclosure.

### DEFINITIONS

As used herein, the singular forms "*a*", *"an"* and *"the"* include plural referents unless the context clearly dictates otherwise.

The terms *"comprising", "comprises"* and *"comprised o*f" as used herein are synonymous with *"including", "includes", "containing"* or *"contains",* and are inclusive or open-ended and do not exclude additional, non-recited members, elements or method steps.

As used herein, the term *"consisting of'* excludes any element, ingredient, member or method step not specified. For completeness, the term *"comprising"* encompasses *"consisting of'.*

The words *"preferred", "preferably", "desirably"* and *"particularly"* are used frequently herein to refer to embodiments of the disclosure that may afford particular benefits, under certain circumstances.

However, the recitation of one or more preferable, preferred, desirable or particular embodiments does not imply that other embodiments are not useful and is not intended to exclude those other embodiments from the scope of the disclosure.

The word *"exemplary"* is used herein to mean serving as an example, instance, or illustration. Any aspect or design described herein as *"exemplary"* is not necessarily to be construed as preferred or advantageous over other aspects or designs. Rather, use of the word exemplary is intended to present concepts in a concrete fashion.

As used throughout this application, the word *"may"* is used in a permissive sense - that is meaning to have the potential to - rather than in the mandatory sense.

The term *"plurality"* as used herein is defined as two or more than two.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

Further, in accordance with standard understanding, a weight range represented as being *"from 0 to x*" specifically includes 0 wt.%: the ingredient defined by said range may be absent from the material or may be present in the material in an amount up to x wt.%.

As used herein, room temperature is 23°C plus or minus 2°C. As used herein, *"ambient conditions"* means the temperature and pressure of the surroundings in which the curable or cured composition is located.

The term *"liquid"* herein means in a liquid state at room temperature and at atmospheric pressure. Analogously, the term *"solid"* means in a solid state at room temperature and at atmospheric pressure. Solid state is defined as the state of matter in which materials are not fluid but retain their boundaries without support, the atoms or molecules occupying fixed positions with respect to each other and unable to move freely.

The molecular weights referred to in this specification can be measured with gel permeation chromatography (GPC) using polystyrene calibration standards, such as is done according to ASTM 3536.

Viscosities of the compositions described herein are, unless otherwise stipulated, measured using the Brookfield Viscometer, Model RVT at standard conditions of 20°C and 50% Relative Humidity (RH). The viscometer is calibrated using silicone oils of known viscosities, which vary from 5,000 cps to 50,000 cps. A set of RV spindles that attach to the viscometer are used for the calibration. Measurements of the coating compositions are done using the No. 6 spindle at a speed of 20 revolutions per minute for 1 minute until the viscometer equilibrates. The viscosity corresponding to the equilibrium reading is then calculated using the calibration.

Where mentioned, a calculated glass transition temperature ("T_{g}") of a polymer or co-polymer is that temperature which may be calculated by using the Fox equation (T. G. Fox, Bull. Am. Physics Soc., Volume 1, Issue No. 3, page 123(1956)). The glass transition temperatures of certain homo-polymers may be found in the published literature, such as in *"*Polymer Handbook", edited by J. Brandrup and E. H. Immergut, Interscience Publishers.

The actual glass transition temperature (T_{g}) of a polymer can be determined by differential scanning calorimetry (DSC) or dynamic mechanical thermal analysis (DMTA). The use of DSC to determine T_{g} is described by B. Cassel and M. P. DiVito in "Use of DSC To Obtain Accurate Thermodynamic and Kinetic Data", American Laboratory, January 1994, pp 14-19, and by B. Wunderlich in Thermal Analysis, Academic Press, Inc., 1990. The determination of glass transition temperatures (T_{g}) by dynamic mechanical thermal analysis (DMTA) may be performed in accordance with ASTM E1640: *DMA Testing: Standard Test Method for Assignment of the Glass Transition Temperature By Dynamic Mechanical Analysis.*

Unless otherwise stated, the term *"particle size"* refers to the largest axis of the particle. In the case of a generally spherical particle, the largest axis is the diameter.

The term *"mean volume particle size" (Dv50),* as used herein, refers to a particle size corresponding to 50% of the volume of the sampled particles being greater than and 50% of the volume of the sampled particles being smaller than the recited Dv50 value. Particle size is determined herein by laser diffraction using Anton Paar Particle Size Analyzer (PSA) 1190.

The term *"electrically conductive"* as used herein references materials, such as fillers, which have a bulk resistivity of less than 10 ohm-cm, in particular less than 1.0 ohm-cm or less than 0.1 ohm-cm.

*"Two-component (2K) compositions"* in the context of the present disclosure are understood to be compositions in which a first component and a second component must be stored in separate vessels because of their (high) reactivity. The two components are mixed before or during application and then react, typically without additional activation, with bond formation and thereby formation of a polymeric network. Herein higher temperatures may be applied in order to accelerate the reaction.

The term *"primary amine compound"* is used interchangeably herein with the term *"compound having at least one primary amine group".* Such compounds are not precluded from having secondary amine and / or tertiary amine groups in their chemical structure.

The term *"amine hydrogen equivalent (AHEW)*" as used herein refers to the weight average molecular weight (Mw) of an amine compound divided by the amine hydrogen functionality (AHF) thereof. The term *"amine hydrogen functionality (AHF)"* is the sum of the hydrogen atoms contributed by each primary and secondary amine nitrogen atom of said amine compound.

As used herein, the term "monomer" refers to a substance that can undergo a polymerization reaction to contribute constitutional units to the chemical structure of a polymer. The term *"monomer"* herein encompasses macromonomers which, in accordance with IUPAC Gold Book are polymeric or oligomeric molecules possessing at least one reactive functional group: the macromonomer participates in a polymerization reaction and contributes a single monomer unit to the chain of the product polymer.

The term *"ethylenically unsaturated compound"* as used herein, refers to any compound containing a terminal double bond capable of polymerization under normal conditions of free-radical addition polymerization.

As used herein, "*(meth)acryl*" is a shorthand term referring to "*acryl*" and/or "*methacryl*"*.* Thus the term *"(meth)acrylate"* refers collectively to acrylate and methacrylate.

As used herein, "*C₁*-*Cₙ alkyl*" group refers to a monovalent group that contains 1 to n carbons atoms, that is a radical of an alkane and includes straight-chain and branched organic groups. As such, a "*C₁-C₄ alkyl*" group refers to a monovalent group that contains from 1 to 4 carbons atoms, that is a radical of an alkane and includes straight-chain and branched organic groups. Examples of alkyl groups include, but are not limited to: methyl; ethyl; propyl; isopropyl; n-butyl; isobutyl; sec-butyl; and, tert-butyl. In the present invention, such alkyl groups may be unsubstituted or may be substituted with one or more halogen. Where applicable for a given moiety (R), a tolerance for one or more non-halogen substituents within an alkyl group will be noted in the specification.

The terms *"alkylene group"* refers to a divalent radical divalent radical formed from an alkyl group, which radical may be may be unsubstituted or may be substituted with one or more halogen.

The term "*C₁-Cₙ hydroxyalkyl*" as used herein refers to an HO-(alkyl) group having from 1 to n carbon atoms, where the point of attachment of the substituent is through the oxygen-atom and the alkyl group is as defined above.

An *"alkoxy group"* refers to a monovalent group represented by -OA where A is an alkyl group: non-limiting examples thereof are a methoxy group, an ethoxy group and an iso-propyloxy group. The term *"alkoxylated"* as used herein means comprising at least one alkoxy group.

As used herein, "*C₂-C₂₀ alkenyl*" group refers to an aliphatic carbon group that contains 2 to 20 carbon atoms and at least one double bond disposed in any position. The alkenyl group can be straight chained, branched or cyclic and may optionally be substituted with one or more halogen. Where applicable for a given moiety (R), a tolerance for one or more non-halogen substituents within an alkenyl group will be noted in the specification. The term *"alkenyl"* also encompasses radicals having "cis" and "trans" configurations, or alternatively, "E" and "Z" configurations, as appreciated by those of ordinary skill in the art. Examples of said C₂-C₂₀ alkenyl groups include, but are not limited to: - CH=CH₂; -CH=CHCH₃; -CH₂CH=CH₂; -C(=CH₂)(CH₃); -CH=CHCH₂CH₃; -CH₂CH=CHCH₃; -CH₂CH₂CH=CH₂; -CH=C(CH₃)₂; -CH₂C(=CH₂)(CH₃); -C(=CH₂)CH₂CH₃; -C(CH₃)=CHCH₃; -C(CH₃)CH=CH₂; -CH=CHCH₂CH₂CH₃; -CH₂CH=CHCH₂CH₃, -CH₂CH₂CH=CHCH₃; - CH₂CH₂CH₂CH=CH₂; -C(=CH₂)CH₂CH₂CH₃; -C(CH₃)=CHCH₂CH₃; -CH(CH₃)CH=CHCH; - CH(CH₃)CH₂CH=CH₂; -CH₂CH=C(CH₃)₂; 1-cyclopent-1-enyl; 1-cyclopent-2-enyl; 1-cyclopent-3-enyl; 1-cyclohex-1-enyl; 1-cyclohex-2-enyl; and, 1-cyclohexyl-3-enyl.

The term "*C₃*-*C₁₈ cycloalkyl*" as used herein means a saturated cyclic hydrocarbon having from 3 to 18 carbon atoms. In the present invention, such cycloalkyl groups may be unsubstituted or may be substituted with one or more halogen. Where applicable for a given moiety (R), a tolerance for one or more non-halogen substituents within a cycloalkyl group will be noted in the specification. Exemplary cycloalkyl groups include cyclopropyl, cyclobutyl, cyclopentyl or cyclohexyl groups.

As used herein, an "*C₆*-*C₁₈ aryl*" group used alone or as part of a larger moiety - as in *"aralkyl group"* - refers to monocyclic, bicyclic and tricyclic ring systems in which the monocyclic ring system is aromatic or at least one of the rings in a bicyclic or tricyclic ring system is aromatic. The bicyclic and tricyclic ring systems include benzofused 2-3 membered carbocyclic rings. In the present disclosure, such aryl groups may be unsubstituted or may be substituted with one or more halogen. Where applicable for a given moiety (R), a tolerance for one or more non-halogen substituents within an aryl group will be noted in the specification. Exemplary aryl groups include: phenyl; (C₁-C₄)alkylphenyl, such as tolyl and ethylphenyl; indenyl; naphthalenyl, tetrahydronaphthyl, tetrahydroindenyl; tetrahydroanthracenyl; and, anthracenyl.

The term *"arylene"* as used herein refers to a divalent radical counterpart of an aryl group. Further, as used herein, "*alkylaryl*" refers to alkyl-substituted aryl groups as set forth above. Moreover, as used herein *"aralkyl"* means an alkyl group substituted with an aryl radical as defined above.

The term *"hetero"* as used herein refers to groups or moieties containing one or more heteroatoms, such as N, O, Si and S. Thus, for example *"heterocyclic"* refers to cyclic groups having, for example, N, O, Si or S as part of the ring structure. "*Heteroalkyl*", "*heterocycloalkyl*", "*heteroaryl*" and "*heteroalkylaryl*" moieties are alkyl, cycloalkyl and aryl groups as defined hereinabove, respectively, containing N, O, Si or S as part of their structure.

The term "*heterocyclyl*" refers to a monovalent chain of carbon and heteroatoms, wherein the heteroatoms are selected from N, O, Si or S, a portion of which, including at least one heteroatom, form a ring.

The term *"substituted"* refers to substitution with at least one suitable substituent. For completeness: the substituents may connect to the specified group or moiety at one or more positions; and, multiple degrees of substitution are allowed unless otherwise stated. Further, the terms *"substitution"* or *"substituted with"* include the implicit proviso that such substitution is in accordance with permitted valence of the substituted atom and the substituent, and that the substitution results in a stable compound that does not spontaneously undergo transformation by, for instance, rearrangement, cyclization or elimination.

The term *"substantially free"* is intended to mean that the constituent, component, compound, moiety, functional group, element, ion or the like is not deliberately added to the subject material and is present, at most, in only trace amounts which will have no (adverse) effect on the desired properties of the material. As regards compositions, an exemplary trace amount is less than 1000 ppm by weight of the composition. The term *"substantially free"* encompasses those embodiments where the specified compound, moiety, functional group, element, ion, or other like component is completely absent from the subject material or is not present in any amount measurable by techniques generally used in the art.

### DETAILED DESCRIPTION OF THE INVENTION

### FIRST COMPONENT

### a) Compound having at least two (meth)acrylate groups

The first component of the composition of the present disclosure comprises: a) at least one compound having at least two (meth)acrylate groups and having a weight average molecular weight (Mw) of at most 600 Daltons. The composition may comprise, based on the weight of the composition, from 20 to 50 wt.%, for example from 20 to 45 wt.% or from 25 to 40 wt.% of a) said at least one compound having at least two (meth)acrylate groups and having a weight average molecular weight (Mw) of at most 600 Daltons.

It is preferred that said (meth)acrylate compounds (a)) have a weight average molecular weight of at most 550 Daltons or at most 500 Daltons. Independently of, or additional to this molecular weight property, it is preferred that said (meth)acrylate compounds of ingredient a) have a dynamic viscosity of from 1 to 400 mPa.s, preferably from 1 to 300 mPa.s or from 1 to 200 mPa.s, as determined at 25°C and at a shear rate of 100s⁻¹.

Whilst compounds having at least two methacrylate groups do have utility in the present disclosure, it is preferred that the or each compound of ingredient a) has at least two acrylate groups. Methacrylates are less reactive in Michael additions than acrylates due to the inductive effect and steric hindrance of the methyl group in the *α*-position of the methacrylate. Thus where *"(meth)acrylate"* is stated herein below for a compound of ingredient a), a preference for the acrylate compound may be presumed where not expressly stated.

Exemplary di(meth)acrylate compounds having utility herein, either alone or in combination, include the di(meth)acrylates of diols. The di(meth)acrylates of alkoxylated diols may be used, in particular the di(meth)acrylates of ethoxylated, propoxylated and / or butoxylated diols. Mention in this regard may be made of: ethylene glycol di(meth)acrylate; propylene glycol di(meth)acrylate; butylene glycol di(meth)acrylate; neopentyl glycol di(meth)acrylate; hexylene glycol di(meth)acrylate; 3-methyl-1,5-pentanediol diacrylate (MPDA); 1,10-decanediol diacrylate (DDDA); tricyclodecanedimethanol diacrylate (TCDDMDA); bisphenol-A diacrylate; esterdiol diacrylate (EDDA); and, propoxylated [2] neopentyl glycol diacrylate (PONPGDA). For completeness, compounds which are alkoxylated have been provided in this list with a bracketed value [*p*] which represents the number of moles of alkoxylation.

Further exemplary compounds having two (meth)acrylate groups include compounds in accordance with Formula A1:

H₂C=C(R¹)-C(O)O-(R²O)ₚ-O(O)C-C(R¹)=CH₂ (A1)

wherein:
each R¹ is independently H or CH₃;
each R² is independently ethylene, propylene, or butylene; and,
p is an integer of from 1 to 8.

It is preferred that: each R¹ is independently H or CH₃, preferably H; each R² is independently ethylene or propylene; and, p is an integer of from 1 to 5 or from 2 to 4.

Exemplary compounds in accordance with Formula A1, which may be used alone or in combination, include but are not limited to: tetraethylene glycol diacrylate (TTEGDA); triethylene glycol diacrylate (TIEGDA); tripropylene glycol diacrylate (TPGDA); and, dipropylene glycol diacrylate (DPGDA).

Tri(meth)acrylate compounds having utility in the present disclosure include the tri(meth)acrylates of trihydric polyols. The tri(meth)acrylates of alkoxylated trihydric polyols may be used, in particular the tri(meth)acrylates of ethoxylated, propoxylated and / or butoxylated trihydric polyols. Exemplary trifunctional (meth)acrylate compounds included but are not limited to: trimethylolpropane triacrylate (TMPTA); pentaerythritol triacrylate (PETIA); ethoxylated [3] trimethylolpropane triacrylate (TMP3EOTA); propoxylated [3] trimethylolpropane triacrylate (TMP3POTA); ethoxylated [6] trimethylolpropane triacrylate (TMP6EOTA); and, propoxylated [3] glyceryl triacrylate (GPTA). For completeness, compounds which are alkoxylated have been provided in this list with a bracketed value [*p*] which represents the number of moles of alkoxylation. A preference may be noted for the use of trimethylolpropane triacrylate (TMPTA) and / or pentaerythritol triacrylate (PETIA).

Further (meth)acrylate compounds having utility in ingredient a) of the first component of composition include but are not limited to: di(trimethylolpropane) tetracrylate; penta erythritol tetracrylate; and, ditrimethylolpropane tetraacrylate (Di-TMPTTA); and, dipentaerythritol pentaacrylate (Di-PEPA).

In an interesting embodiment, ingredient a) of the two-component composition may comprise at least one compound of Formula (All):

A-[-R^{a}-O-C(O)-C(R^{b})=CH₂]_{q} (All)

wherein:
R^{a} is C₁-C₄ alkylene;
R^{b} is H or C₁ alkyl;
q is 2 or 3; and,
A is

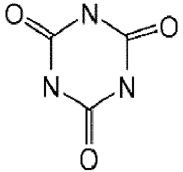

Compounds in which: R² is C₂-C₄ alkylene; R^{b} is H or C₁ alkyl, preferably H; and, q is 3 have particular utility in the present composition. And exemplary compounds in accordance with Formula (All) include but are not limited to: tris(2-hydroxyethyl) isocyanurate triacrylate (THEICTA); tris(2-hydroxyethyl) isocyanurate trimethacrylate; tris(3-hydroxypropyl) isocyanurate triacrylate; and, tris(3-hydroxypropyl) isocyanurate trimethacrylate.

### b) Further Ethylenically Unsaturated Compounds

The first component of the composition may optionally comprise at least one ethylenically unsaturated compound which is distinct from the compounds of ingredient a). The composition may, for example, comprise from 0 to 10 wt.% or from 0 to 5 wt.%, based on the total weight of the composition, of b) said at least one ethylenically unsaturated compounds distinct from said compounds of ingredient a). Exemplary ethylenically unsaturated compounds, which may be distinguished from compounds of ingredient a) by *inter alia* molecular weight and / or the number of ethylenically unsaturated groups in a given molecule, are given below.

### b1) (Meth)acrylate-functionalized macromonomer

In an embodiment, the first component of the composition may comprise b1) at least one (meth)acrylate-functionalized macromonomer having a weight average molecular weight (Mw) of from 750 to 100000 daltons. Said macromonomers may have one or more acrylate and/or methacrylate groups attached to the polymeric or oligomeric backbone, which (meth)acrylate functional groups may be in a terminal position on the macromonomer and / or may be distributed along the polymeric or oligomeric backbone thereof.

It is preferred that the or each (meth)acrylate functionalized macromonomer b1) has: two or more (meth)acrylate functional groups per molecule; and, a weight average molecular weight (Mw) of from 750 to 100000 daltons, for example from 1000 to 100000 daltons.

Examples of such macromonomers, which may be used alone or in combination, include but are not limited to: (meth)acrylate-functionalized urethane macromonomers, such as (meth)acrylate-functionalized polyester urethanes, (meth)acrylate-functionalized polyether urethanes and (meth)acrylate functionalized polyurea urethanes; (meth)acrylate-functionalized polyepoxide resins; (meth)acrylate-functionalized polybutadienes; (meth)acrylic polyol (meth)acrylates, which may be prepared from poly(meth)acrylates which carry OH groups; polyester (meth)acrylate macromonomers; polyamide (meth)acrylate macromonomers; polyurea (meth)acrylate macromonomers; poly(meth)acrylates of oxyalkane polyols, such as diethylene glycol di(meth)acrylate, dipropylene glycol di(meth)acrylate, triethylene glycol di(meth)acrylate, tetraethylene glycol di(meth)acrylate, dibutylene glycol di(meth)acrylate, di(pentamethylene glycol)dimethacrylate; and, polyether (meth)acrylate macromonomers, including polyethylene glycol di(meth)acrylates.

In certain circumstances, ingredient b1) may comprise or consist of at least one (meth)acrylate ester corresponding to Formula (Bl): 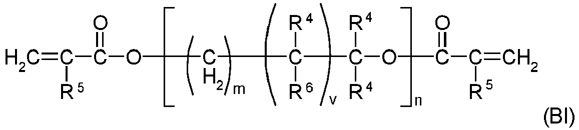 wherein:
R⁴ is selected from hydrogen, C₁-C₄ alkyl or 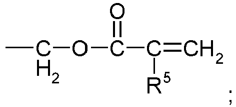
R⁵ is selected from hydrogen, halogen or C₁-C₄ alkyl;
R⁶ is selected from hydrogen, hydroxy or 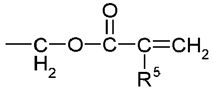
m is an integer ≥1, preferably from 1 to 8;
v is 0 or 1; and,
n is an integer n is ≥14, preferably from 14 to 30.

Of such polyether (meth)acrylates of Formula (BI) mention may in particular be made of polyethylene glycol) di(meth)acrylates possessing the structure below: 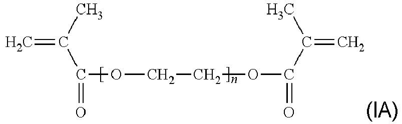 wherein: n is ≥14, preferably from 14 to 30

As such, specific examples include but are not limited to: PEG 600 DMA (n≈ 14); and, PEG 800 DMA (n≈19), in which the assigned number (e.g., 600) represents the weight average molecular weight of the glycol portion of the molecule.

Another useful class of macromonomer having utility herein, either alone or in combination with other macromonomers, are the reaction product of (meth)acrylate functionalized hydroxyl- or amino-containing materials and polyisocyanate in suitable stoichiometric amounts so as to convert all of the isocyanate groups to urethane or ureido groups, respectively.

(Meth)acrylate esters suitable as reactants may possess the formula:

H₂C=C(R^{c})-C(O)-O-R^{d}-L-H

wherein:
R^{c} is H, halogen or C₁ alkyl;
R^{d} is C₁-C₈ alkylene, C₆-C₁₈ arylene, C₇-C₁₈ alkylarylene or C₇-C₁₈ aralkylene;
L is -O- or-N(R^{e})-; and,
R^{e} is H or C₁-C₆ alkyl.

Upon proper reaction with a polyisocyanate, a macromonomer is yielded having the general formula (U1):

[H₂C=C(R^{c})-C(O)-O-R^{d}-L-C(O)-NH-]ₙ-B

wherein:
n is an integer of from 2 to 6;
R^{c}, R^{d}, R^{e}, L have the meanings assigned above; and,
B is a polyvalent organic radical selected from alkyl, alkenyl, cycloalkyl, cycloalkenyl, aryl, alkaryl, alkaryl or heterocyclic radicals.

Exemplary macromonomers in accordance with Formula (U1) may possess a weight average molecular weight (Mw) of from 1000 to 10000 daltons, such as from 1000 to 5000 daltons.

### b2) Aliphatic and Cycloaliphatic (Meth)acrylate Compounds

In certain embodiments, the two-component (2K) composition may comprise b2) at least one (meth)acrylate compound represented by Formula (BII):

H₂C=CGCO₂R^{f} (BII)

wherein:
G is hydrogen, halogen or a C₁ alkyl group; and,
R^{f} is chosen from: C₁-C₃₀ alkyl; C₁-C₁₈ hydroxyalkyl; C₂-C₃₀ heteroalkyl; C₃-C₃₀ cycloalkyl; C₂-C₈ heterocycloalkyl; C₂-C₂₀ alkenyl; or, C₂-C₁₂ alkynyl.

For example, R^{f} may be chosen from: C₁-C₁₈ alkyl, C₁-C₁₂ hydroxyalkyl; C₂-C₁₈ heteroalkyl, C₃-C₁₈ cycloalkyl; C₂-C₈ heterocycloalkyl; C₂-C₈ alkenyl; or, C₂-C₈ alkynyl. Desirably, said compound(s) b2) are characterized in that R^{f} is C₁-C₁₈ alkyl, C₁-C₆ hydroxyalkyl or C₃-C₁₈ cycloalkyl.

Examples of (meth)acrylate compounds b2) in accordance with Formula (BII) include but are not limited to: methyl (meth)acrylate; ethyl (meth)acrylate; butyl (meth)acrylate; hexyl (meth)acrylate; 2-ethylhexyl (meth)acrylate; dodecyl (meth)acrylate; lauryl (meth)acrylate; cyclohexyl (meth)acrylate; isobornyl (meth)acrylate; 2-hydroxyethyl (meth)acrylate (HEMA); 2-hydroxypropyl (meth)acrylate; ethylene glycol monomethyl ether (meth)acrylate; ethylene glycol monoethyl ether (meth)acrylate; ethylene glycol monododecyl ether (meth)acrylate; diethylene glycol monomethyl ether (meth)acrylate; trifluoroethyl (meth)acrylate; and, perfluorooctyl (meth)acrylate.

### b3) Aromatic (Meth)acrylate Compounds

In certain embodiments, the two-component (2K) composition may comprise b3) at least one (meth)acrylate compound represented by Formula BIII:

H₂C=CQCO₂R^{g} (BIII)

wherein:
Q may be hydrogen, halogen or a C₁ alkyl group; and,
R^{g} is C₆-C₁₈ aryl, C₁-C₉ heteroaryl, C₇-C₁₈ alkylaryl, C₇-C₁₈ heteroalkylaryl or C₇-C₁₈ aralkyl.

Exemplary (meth)acrylate compounds b3) in accordance with Formula (BIII) - which may be used alone or in combination - include but are not limited to: benzyl (meth)acrylate; phenoxyethyl (meth)acrylate; phenoxydiethylene glycol (meth)acrylate; phenoxypropyl (meth)acrylate; and, phenoxydipropylene glycol (meth)acrylate.

### b4) Further Ethylenically Unsaturated Compounds

The two-component (2K) composition may comprise further ethylenically unsaturated compounds not conforming to the definitions of a), b1), b2) and b3) given above.

Operable further (meth)acrylate compounds include those that possess certain additional functionalities which are not reactive with (meth)acrylate groups but which can improve the surface adhesion of polymers derived therefrom. Mention in this regard may be made of anhydride, phosphate or phosphonate functionalities and (meth)acrylate compounds bearing such functionalities may be used in the present composition. A listing of such compounds bearing phosphate or phosphonate functionalities may be found in US Patent No. 4,223,115. Exemplary compounds include: 2-monomethacryloxyethyl phosphate; bis(2-methacryloxyethyl) phosphate; 2-acryloyloxyethyl phosphate; bis-(2-acryloyloxyethyl) phosphate; methyl-(2-methacryloyloxyethyl) phosphate; ethyl methacryloyloxyethyl phosphate; methyl acryloyloxyethyl phosphate; ethyl acryloyloxyethyl phosphate; 2-hydroxyethylmethacrylate phosphate; 10-[(2-methylprop-2-enoyl)oxy]decyl dihydrogen phosphate (*10-methacryloyloxydecyl dihydrogen phosphate*); and, 4-methacryloxyethyl trimellitic anhydride.

The composition may, in certain circumstances, further comprise co-polymerizable acid. It is considered that the co-polymerizable acid might improve the cure speed and metal adhesion of the composition. For completeness, whilst such compounds should typically be used in the form of free acid, it is not precluded that the constituent acid groups of the compounds be partially or completely neutralized with suitable bases, provided this does not compromise their participation in copolymerization.

Without intention to limit the present disclosure, co-polymerizable acid compounds should be selected from: ethylenically unsaturated carboxylic acids; ethylenically unsaturated sulfonic acids; and; vinylphosphonic acid. Suitable ethylenically unsaturated sulfonic acids are, for instance, vinylsulfonic acid, styrenesulfonic acid and acrylamidomethylpropanesulfonic acid.

Preferably the co-polymerizable acid comprises or consists of ethylenically unsaturated carboxylic acids chosen from: α,β-monoethylenically unsaturated monocarboxylic acids; α,β-monoethylenically unsaturated dicarboxylic acids; C₁-C₆ alkyl half-esters of α,β-monoethylenically unsaturated dicarboxylic acids; α,β-monoethylenically unsaturated tricarboxylic acids; and, C₁-C₆ alkyl esters of α,β-monoethylenically unsaturated tricarboxylic acids bearing at least one free carboxylic acid group; and, mixtures thereof. In particular, the co-polymerizable acid of this part may comprise or consist of at least one acid chosen from methacrylic acid, acrylic acid, itaconic acid, maleic acid, aconitic acid, crotonic acid and fumaric acid.

It is not precluded that the composition may comprise allylic compounds which can be copolymerized with (meth)acrylate compounds. Mention in this regard may be made of: prop-2-en-1-ol (*allyl alcohol*); 3-chloroprop-1-ene (*allyl chloride*); diallyl ortho-phthalate; diallyl terephthalate, diethylene glycol diallyl carbonate; triallyl cyanurate; triallyl trimesate; and, triallyl isocyanurate. However, when included, such allylic co-compounds should constitute less than 10 wt.%, preferably less than 5 wt.%, based on the total weight of ethylenically unsaturated compounds in the composition.

It is furthermore not precluded that the composition may comprise vinyl compounds which can be copolymerized with (meth)acrylate compounds and which are selected from the group consisting of: styrene compounds, such as styrene, vinyltoluene, α-methylstyrene and chlorostyrene; fluorine containing vinyl compounds, such as perfluoroethylene, perfluoropropylene and fluorinated vinylidene; silicon containing vinyl compounds such as vinyltrimethoxysilane and vinyltriethoxysilane; maleimide compounds, such as maleimide, methylmaleimide, ethylmaleimide, propylmaleimide, butylmaleimide, hexylmaleimide, octylmaleimide, dodecylmaleimide, stearylmaleimide, phenylmaleimide and cyclohexylmaleimide; nitrile group containing vinyl compounds, such as acrylonitrile and methacrylonitrile; amide group containing vinyl compounds, such as acrylamide and methacrylamide; vinyl esters such as vinyl acetate, vinyl propionate, vinyl pivalate, vinyl benzoate and vinyl cinnamate; alkenes such as ethylene and propylene; conjugated dienes such as butadiene and isoprene; and vinyl chloride and vinylidene chloride. However, when included, such vinyl co-compounds should constitute less than 10 wt.%, preferably less than 5 wt.%, based on the total weight of ethylenically unsaturated compounds in the composition.

### SECOND COMPONENT

The second component of the present two-component (2K) composition comprises c) at least one compound having at least one primary amine group. When formulating the two-component (2K) composition, it is preferred that said primary amine compound(s) are included in such an amount that the composition *in toto* is characterized by a molar ratio of (meth)acrylate groups to primary amine groups of from 3:1 to 1:1, for example from 2:1 to 1:1 or from 1.8:1 to 1.2:1.

Subject to meeting the above molar ratio condition, the composition may be further characterized by comprising from 5 to 25 wt.%, for example from 10 to 25 wt.% or from 10 to 20 wt.% of c) said at least one compound having at least one primary amine group, based on the weight of the composition.

It is preferred that the or each primary amine compound included in ingredient c) of composition has an amine hydrogen equivalent weight of at most 125 g/eq., of at most 100 g/eq. or at most 90 g/eq. For instance, the or each primary amine compound of ingredient c) may have an amine hydrogen equivalent weight of at most 85 g/eq. such as from 40 to 85 g/eq.

To limit or prevent competition with the Aza-Michael reaction, it is preferred that the primary amine compound does not contain functional groups that may be more reactive than primary amines towards the Michael acceptor double-bonds borne by the electrophilic (meth)acrylate functional compounds of ingredient a). It is not precluded, for instance, that the primary amine compound may contain secondary amine (-NHR), hydroxyl (-OH) or thiol (-SH) functional groups which are less reactive than primary amine functional groups towards Michael addition.

In an embodiment, the second component comprises a primary amine compound of the Formula R^{PA}-(NH₂) wherein R^{PA} is: C₁-C₁₈ alkyl; C₁-C₁₈ heteroalkyl; C₃-C₁₈ cycloalkyl; C₃-C₁₈ heterocycloalkyl; C₂-C₁₈ alkenyl; C₂-C₁₈ heteroalkenyl; C₂-C₁₈ alkynyl; C₂-C₁₈ heteroalkynyl; C₆-C₁₈ aryl; 5- or 6-membered heteroaryl; 5 to 6 member heterocycle; C₇-C₁₈ aralkyl; or, C₇-C₁₈ alkaryl, further wherein each of the foregoing groups may optionally be substituted with halogen, -CN, C₁-C₆ alkyl, -OR^{x}, - C(O)OR^{x} or -N(R^{x}R^{y}), wherein R^{x} and R^{y} are independently H, C₁-C₆ alkyl or C₆-C₁₈ aryl. In accordance with this general formula, it is not precluded that the primary amine compound may further comprise secondary amine and / or tertiary amine groups.

In another embodiment, which is not intended to be mutually exclusive of that above, the second component may comprise at least one cycloaliphatic polyamine which contains at least one primary amine group (-NH₂). The term *"cycloaliphatic amine"* refers to a molecule with an amine group which is connected to an aliphatic carbon atom of a cycloaliphatic moiety. The term *"cycloaliphatic"* denotes a saturated or unsaturated but non-aromatic carbocyclic radical comprising one or several fused rings, which rings may optionally be fused. The cycloaliphatic group may be unsubstituted or may optionally be substituted with one or more halogen. The term *"cycloaliphatic"* also includes *"heterocycloaliphatic"* groups, that is non-aromatic monocyclic or polycyclic rings in which one or more carbon atoms of the ring(s) have been replaced with a heteroatom. Herein the cycloaliphatic group is preferably a C₃-C₁₈ cycloalkyl group of which specific mention may be made of cycloheptyl, cyclohexyl and cyclopentyl groups. The cycloaliphatic radicals may be present at either the alpha-position directly attached to the amine group or at the beta position adjacent to said alpha-position.

Exemplary cycloaliphatic polyamines having at least one primary amine group (-NH₂), which may be used alone or in combination, include but are not limited to: cyclohexane-1,2-diamine; cyclohexane-1,3-diamine; cyclohexane-1,4-diamine; bis(4-aminocyclohexyl)methane (PACM); bis(4-amino-3-methylcyclohexyl)methane; bis(4-amino-3-ethylcyclohexyl)methane; bis(4-amino-3,5-dimethylcyclohexyl)methane; bis(4-amino-3-ethyl-5-methylcyclohexyl)methane; 1-amino-3-aminomethyl-3,5,5-trimethylcyclohexane; 2- and / or 4-methyl-1,3-diaminocyclohexane; 1,3-bis(aminomethyl)-cyclohexane; 1,4-bis(aminomethyl)cyclohexane; 2,5(2,6)-bis(aminomethyl)-bicyclo[2.2.1]heptane (norborane diamine, NBDA); 3(4),8(9)-bis(aminomethyl)tricyclo[5.2.1.02,6]-decane (TCD-diamine); 1,4-diamino-2,2,6-trimethylcyclohexane (TMCDA); N,N-bis(3-aminopropyl)cyclohexylamine; 1,8-menthanediamine; N-cyclohexyl-1,2-ethanediamine; N-cyclohexyl-1,3-propanediamine; 3-cyclohexylamino-1-pentylamine; 4-aminomethyl-piperidine; and, N-(2-aminoethyl)piperazine. The use of bis(4-aminocyclohexyl)methane (PACM) may be mentioned in particular.

Further primary amine compounds having utility in this disclosure, either alone or in combination, include: cycloaliphatic ether group-containing diamines obtained from the propoxylation and subsequent amination of 1,4-dimethylolcyclohexane, such as that material commercially available as Jeffamine@ RFD-270 (from Huntsman); N,N'-bis(aminopropyl)-piperazine; N,N-bis(3-aminopropyl)methylamine; N,N-bis(3-aminopropyl)ethylamine; N,N-bis(3-aminopropyl)propylamine; N,N-bis(3-aminopropyl)-2-ethyl-hexylamine; tris(2-aminoethyl)amine; tris(2-aminopropyl)amine; tris(3-aminopropyl)amine; N,N-dimethyldipropylenetriamine (DMPAPA, N'-(3-aminopropyl)-N,N-dimethyl-1,3-propanediamine); and, the products from the double cyanoethylation and subsequent reduction of fatty amines derived from natural fatty acids, such as N,N-bis(3-aminopropyl)dodecylamine and N,N-bis(3-aminopropyl)tallow alkylamine which are commercially available as Triameen^{®} Y12D and Triameen^{®} YT from Akzo Nobel.

Still further polyamines having at least one primary amine group, which may be used alone or in combination in the second component, include but are not limited to the following:
ci): Aliphatic or arylaliphatic primary diamines of which the following examples may be mentioned: 2,2-dimethyl-1,3-propanediamine; 1,3-pentanediamine (DAMP); 1,5-pentanediamine; 1,5-diamino-2-methylpentane (MPMD); 2-butyl-2-ethyl-1,5-pentanediamine (C11-neodiamine); 1,6-hexanediamine (hexamethylenediamine, HMDA); 2,5-dimethyl-1,6-hexanediamine; 2,2,4- and / or 2,4,4-trimethylhexamethylenediamine; 1,7-heptanediamine; 1,8-octanediamine; 1,9-nonanediamine; 1,10-decanediamine; 1,11-undecanediamine; 1,12-dodecanediamine; 3,9-bis(3-aminopropyl)-2,4,8,10-tetraoxaspiro[5.5]undecane; and, 1,3-bis(aminomethyl)benzene (MXDA). cii): Ether group-containing aliphatic primary polyamines of which the following specific examples may be mentioned: bis(2-aminoethyl)ether; 3,6-dioxaoctane-1,8-diamine; 4,7-dioxadecane-1,10-diamine; 4,7-dioxadecane-2,9-diamine; 4,9-dioxadodecane-1,12-diamine; 5,8-dioxadodecane-3,10-diamine; 4,7,10-trioxatridecane-1,13-diamine; bis(3-aminopropyl)polytetrahydrofuranes and other polytetrahydrofuran diamines; polyoxyalkylenedi- or -triamines obtainable as products from the amination of polyoxyalkylenedi- and -triols, such as those commercially available under the name of Jeffamine@ (from Huntsman), under the name of polyetheramine (from BASF) or under the name of PC Amines^{®} (from Nitroil). A particular preference may be noted for the use of Jeffamine^{®} D-230, Jeffamine@ D-400, Jeffamine^{®}D-600, Jeffamine@ D-2000, Jeffamine@ D-4000, Jeffamine^{®} T-403, Jeffamine@ T-3000, Jeffamine@ T-5000, Jeffamine@ EDR-104, Jeffamine^{®} EDR-148 and Jeffamine^{®} EDR-176, as well as corresponding amines from BASF or Nitroil.
ciii): Primary diamines with secondary amine groups of which the following examples may be mentioned: 3-(2-aminoethyl)aminopropylamine, bis(hexamethylene)triamine (BHMT); diethylenetriamine (DETA); triethylenetetramine (TETA); tetraethylenepentamine (TEPA); pentaethylenehexamine (PEHA); higher homologs of linear polyethyleneamines, such as polyethylene polyamines with 5 to 7 ethyleneamine units (so-called *"higher ethylenepolyamine,"* HEPA); products from the multiple cyanoethylation or cyanobutylation and subsequent hydrogenation of primary di- and polyamines with at least two primary amine groups, such as dipropylenetriamine (DPTA), N-(2-aminoethyl)-1,3-propanediamine (N3-amine), N,N'-bis(3-aminopropyl)ethylenediamine (N4-amine), N,N'-bis(3-aminopropyl)-1,4-diaminobutane, N5-(3-aminopropyl)-2-methyl-1,5-pentanediamine, N3-(3-aminopentyl)-1,3-pentanediamine, N5-(3-amino-1-ethylpropyl)-2-methyl-1,5-pentanediamine or N,N'-bis(3-amino-1-ethylpropyl)-2-methyl-1,5-pentanediamine.
civ): Polyamines with one primary and at least one secondary amino group of which the following examples may be mentioned: N-butyl-1,2-ethanediamine; N-hexyl-1,2-ethanediamine; N-(2-ethylhexyl)-1,2-ethanediamine; N-methyl-1,3-propanediamine; N-butyl-1,3-propanediamine; N-(2-ethylhexyl)-1,3-propanediamine; 3-methylamino-1-pentylamine; 3-ethylamino-1-pentylamine; fatty diamines such as N-cocoalkyl-1,3-propanediamine; products from the Michael-type addition reaction of primary aliphatic diamines with acrylonitrile, maleic or fumaric acid diesters, citraconic acid diesters, acrylic and methacrylic acid esters, acrylic and methacrylic acid amides and itaconic acid diesters, reacted in a 1:1 molar ratio; products from the partial reductive alkylation of primary polyamines with aldehydes or ketones, especially N-monoalkylation products of the previously mentioned polyamines with two primary amine groups and in particular of 1,6-hexanediamine, 1,5-diamino-2-methylpentane, 1,3-bis(aminomethyl)cyclohexane, 1,4-bis(aminomethyl)cyclohexane, 1,3-bis(aminomethyl)benzene, BHMT, DETA, TETA, TEPA, DPTA, N3-amine and N4-amine, wherein preferred alkyl groups are isobutyl, hexyl and 2-ethylhexyl; and, partially styrenated polyamines, such as those commercially available as Gaskamine^{®} 240 from Mitsubishi Gas Chemical.
cv): Aromatic polyamines of which mention may be made of: m- and p-phenylenediamine; 4,4'-, 2,4'- and 2,2'-diaminodiphenylmethane; 3,3'-dichloro-4,4'-diaminodiphenylmethane (MOCA); 2,4- and 2,6-tolylenediamine; mixtures of 3,5-dimethylthio-2,4- and -2,6-tolylenediamine, available as Ethacure^{®} 300 from Albermarle; mixtures of 3,5-diethyl-2,4- and -2,6-tolylene diamine (DETDA); 3,3',5,5'-tetraethyl-4,4'-diaminodiphenylmethane (M-DEA); 3,3',5,5'-tetraethyl-2,2'-dichloro-4,4'-diaminodiphenylmethane (M-CDEA); 3,3'-diisopropyl-5,5'-dimethyl-4,4'-diaminodiphenylmethane (M-MIPA); 3,3',5,5'-tetraisopropyl-4,4'-diaminodiphenylmethane (M-DIPA); 4,4'-diamino diphenylsulfone (DDS); 4-amino-N-(4-aminophenyl)benzenesulfonamide; 5,5'-methylenedianthranilic acid; dimethyl-5,5'-methylenedianthranilate; 1,3-propylene-bis(4-aminobenzoate); 1,4-butylene-bis(4-aminobenzoate); polytetramethylene oxide-bis(4-aminobenzoate), available as Versalink^{®} from Air Products; 1,2-bis(2-aminophenylthio)ethane, 2-methylpropyl-(4-chloro-3,5-diaminobenzoate); and, t-butyl-(4-chloro-3,5-diaminobenzoate).
cvi): Polyamidoamines of which indicative members include the reaction products of monohydric or polyhydric carboxylic acids or the esters or anhydrides thereof - in particular dimer fatty acids - and an aliphatic, cycloaliphatic or aromatic polyamine, for instance polyalkyleneamines such as DETA or TETA. Commercially available polyamidoamines include: Versamid^{®} 100, 125, 140 and 150 (from Cognis); Aradur^{®} 223, 250 and 848 (from Huntsman); Euretek^{®} 3607 and 530 (from Huntsman); and, Beckopox^{®} EH 651, EH 654, EH 655, EH 661 and EH 663 (from Cytec).

It will be noted that ingredient c) of the present composition may comprise compounds having both primary and secondary amine groups. In addition to meeting the above define stoichiometric ratio of (meth)acrylate groups to primary amine groups, the two-component (2K) composition may be further characterized by a stoichiometric ratio of (meth)acrylate groups to reactive amine hydrogen atoms of from 1.5:1 to 0.7:1 for example from 1.2:1 to 0.8:1. These ranges include the stochiometric ratio of (meth)acrylate groups to reactive amine hydrogen atoms of 1:1, which in itself represents a preferred ratio.

### d) Rheology Control Agent

The two-component (2K) composition of the present disclosure comprises d) a rheology control agent comprising electrically non-conductive fillers, electrically conductive fillers or mixtures thereof. For completeness, the rheology control agent may be disposed in the first component, the second component or both of the first and second components.

The presence of electrically non-conductive fillers in the composition may serve to moderate the viscosity of the composition and to reduce the coefficient of thermal expansion of the adhesive. Broadly, there is no particular intention to limit the shape of the particles employed as non-conductive fillers: particles that are acicular, spherical, ellipsoidal, cylindrical, bead-like, cubic or platelet-like may be used alone or in combination. Moreover, it is envisaged that agglomerates of more than one particle type may be used. Equally, there is no particular intention to limit the size of the particles employed as electrically non-conductive fillers. However, such non-conductive fillers will conventionally have a mean volume particle size (Dv50), as measured by laser diffraction, of from 0.01 to 1500 µm, for example from 0.1 to 1000 µm or from 0.1 to 500 µm.

Exemplary non-conductive fillers include but are not limited to barium sulphate, calcium carbonate, calcium oxide, calcium metasilicate, silica, fumed silica, sand, quartz, zeolites, bentonites, magnesium carbonate, diatomite, alumina, clay, talcum, flint, mica, glass powder, zinc oxide and other ground mineral substances. Non-conductive fillers derived from agricultural and food processing might also be used, of which examples include particles obtained by comminuting: kernels, for example of olives, apricots and peaches; shells, for example of tagua nuts, walnuts, pecan nuts, pistachios and almonds; and, lignocellosic materials, for example rice hulls, oat hulls and tree bark. Further, short fibres such as glass fibres, glass filament, polyacrylonitrile, carbon fibres, polyethylene fibres can also be added. A preliminary preference may be noted for non-conductive filler selected from the group consisting of: calcium carbonate; calcium oxide; calcium metasilicate; talcum; fumed silica; silica; barium sulphate; and, mixtures thereof. The use of precipitated and / or fumed (pyrogenic) silica as a rheology control agent in the present compositions is particularly preferred: such precipitated or pyrogenic silica should desirably have a BET surface area of from 25 to 500 m²/g, for example from 100 to 250 m²/g as measured by means of nitrogen adsorption according to DIN 66131. A commercial example of such a fumed (pyrogenic) silica is Aerosil 200, available from Evonik Industries.

Also suitable as electrically non-conductive fillers are hollow spheres having a mineral shell or a plastic shell. These can be, for example, hollow glass spheres that are obtainable commercially under the trade names Glass Bubbles^{®}. Plastic-based hollow spheres, such as Expancel^{®} or Dualite^{®}, may be used and are described in EP 0 520 426 B1: they are made up of inorganic or organic substances and each have a diameter of 1 mm or less, preferably 500 µm or less, preferably between 100 µm and 200 µm.

Non-conductive fillers which impart thixotropy to the composition may have utility in certain applications: such fillers are also described as rheological adjuvants, e.g. hydrogenated castor oil, fatty acid amides, or swellable plastics such as PVC.

As noted, the compositions according to the present invention may additionally contain electrically conductive fillers as at least part of the rheology control agent. Broadly, there is no particular intention to limit the shape of the particles employed as conductive fillers: particles that are acicular, spherical, ellipsoidal, cylindrical, bead-like, cubic or platelet-like may be used alone or in combination. Moreover, it is envisaged that agglomerates of more than one particle type may be used. Equally, there is no particular intention to limit the size of the particles employed as conductive fillers. However, such conductive fillers will conventionally have a mean volume particle size (Dv50), as measured by laser diffraction, of from 1 to 500 µm, for example from 1 to 200 µm.

Exemplary conductive fillers include, but are not limited to: silver; copper; gold; palladium; platinum; nickel; gold or silver-coated nickel; carbon black; carbon fibre; carbon nanotubes; graphite; aluminium; indium tin oxide; silver coated copper; silver coated aluminium; metallic coated glass spheres; metallic coated filler; metallic coated polymers; silver coated fibre; silver coated spheres; antimony doped tin oxide; conductive nanospheres; nano silver; nano aluminium; nano copper; nano nickel; carbon nanotubes; and, mixtures thereof. The use of particulate silver and / or carbon black as the conductive filler is preferred.

The total amount of rheology control agent present in the compositions of the present invention will preferably be from 10 to 60 wt.%, such as from 15 to 60 wt.% or from 20 to 60 wt.%, based on the total weight of the composition. The desired viscosity of the curable composition formed upon mixing its ingredients will generally be determinative of the total amount of rheology control agent added. The two component (2K) curable compositions may typically be formulated to exhibit an initial viscosity - determined immediately after mixing, for example, up to two minutes after mixing - of less than 200000 mPa s, for instance less than 100000 mPa.s, at 25°C.

### ADDITIVES AND ADJUNCT INGREDIENTS

Said compositions obtained in the present disclosure will typically further comprise adjuvants and additives that can impart improved properties to these compositions. For instance, the adjuvants and additives may impart one or more of: improved elastic properties; improved elastic recovery; longer enabled processing time; faster curing time; and, lower residual tack. Included among such adjuvants and additives are: catalyst; tougheners; plasticizers; stabilizers including UV stabilizers; antioxidants; reactive diluents; drying agents; adhesion promoters; fungicides; flame retardants; color pigments or color pastes; and/or optionally also, to a small extent, non-reactive diluents.

Such adjuvants and additives can be used in such combination and proportions as desired, provided they do not adversely affect the nature and essential properties of the composition. While exceptions may exist in some cases, these adjuvants and additives should not *in toto* comprise more than 50 wt.% of the total composition and preferably should not comprise more than 20 wt.% of the composition.

For completeness, it is noted that, in general, adjunct materials and additives which contain reactive groups will generally be blended into the appropriate component of the two component (2K) composition to ensure the storage stability thereof. Unreactive materials may be formulated into either or both of the two components.

The composition may in certain embodiments be free of catalyst. In other embodiments, the composition - conventionally the first component thereof - may comprise a catalyst. For example, the curable composition may comprise from 0 to 2 wt.%, for instance from 0.1 to 1.0 wt.% of catalyst, based on the total weight of the composition. Any catalyst conventionally used in Michael addition chemistry may have utility in the present composition.

In an embodiment, a basic catalyst may be used and, in particular, a catalyst which comprise at least one catalytic compound having a pKa of at least 9, such as a pKa of at least 10 or even at least 11. Exemplary catalytic compounds, which may be used alone or in combination include: i) alkali metal hydroxides; ii) alkali metal alkoxides; iii) alkali metal silicates; iv) quaternary ammonium compounds, such as tetrabutylammonium hydroxide, benzyltrimethylammonium hydroxide, tetrabutylammonium carbonate and benzyltrimethyl ammonium chloride; v) tertiary amines, such as 1,4-diazabicyclo[2.2.2]octane, benzyldimethylamine, α-methylbenzyl dimethylamine, triethanolamine, dimethylamino propylamine, imidazoles - including N-methylimidazole, N-vinylimidazole and 1,2-dimethylimidazole - and salts of such tertiary amines; vi) amidines, such as 1,8-diazabicyclo[5.4.0]undec-7-ene; vii) guanidines, such as 1,1,3,3-tetramethylguanidine; viii) Mannich bases; and, ix) phosphine catalysts, such as tricyclohexylphosphine, tricyclopentylphosphine, tri-n-hexylphosphine, tris(2,4,4-trimethylpentyl)phosphine, tris(2-ethylhexyl)phosphine, tri-n-octylphosphine, tri-n-decylphosphine, tri-n-dodecylphosphine, tristearylphosphine and triphenylphosphine.

In an alternative embodiment, an acidic catalyst be used. For example, the catalyst may comprise at least one compound chosen from: Bronsted acids, such as boric acid, peracetic acid, polystyrenesulfonic acid, tungstophosphoric acid, trifluoromethanesulfonic acid and tetrfluoroboric acid; Lewis acids, such as zinc oxide, boron halides, aluminium halides, aluminium alkyl halides, magnesium halides, magnesium alkyl halides, tin halides, tin alkyl halides, zinc halides, zinc alkyl halides, CeCl₃, InCl₃, FeCl₃ and sulfated zirconia; and, mixtures thereof.

The optional presence of tougheners - in an amount up to 15 wt.% or even up to 20 wt.%, based on the weight of the composition - can in certain embodiments be advantageous to the debonding of the cured adhesive. Without intention to be bound by theory, tougheners may facilitate phase separation within the cured adhesive under the application of electrical potential. Exemplary tougheners may be selected from: amine functionalized tougheners; C=C double-bond functionalized rubber; and, toughening rubber in the form of core-shell particles.

The term *"core shell rubber"* or CSR is being employed in accordance with its standard meaning in the art as denoting a rubber particle core formed by a polymer comprising an elastomeric or rubbery polymer as a main ingredient and a shell layer formed by a polymer which is graft polymerized onto the core. The shell layer partially or entirely covers the surface of the rubber particle core in the graft polymerization process. By weight, the core should constitute at least 50 wt.% of the core-shell rubber particle.

The polymeric material of the core should have a glass transition temperature (T_{g}) of no greater than 0⁰C and preferably a glass transition temperature (T_{g}) of -20°C or lower, more preferably -40°C or lower and even more preferably -60°C or lower. The polymer of the shell is non-elastomeric, thermoplastic or thermoset polymer having a glass transition temperature (T_{g}) of greater than room temperature, preferably greater than 30°C and more preferably greater than 50°C.

Without intention to limit the invention, the core may be comprised of: a diene homopolymer, for example, a homopolymer of butadiene or isoprene; a diene copolymer, for example a copolymer of butadiene or isoprene with one or more ethylenically unsaturated monomers, such as vinyl aromatic monomers, (meth)acrylonitrile or (meth)acrylates; polymers based on (meth)acrylic acid ester monomers, such as polybutylacrylate; and, polysiloxane elastomers such as polydimethylsiloxane and crosslinked polydimethylsiloxane.

Similarly without intention to limit the present invention, the shell may be comprised of a polymer or copolymer of one or more monomers selected from: (meth)acrylates, such as methyl methacrylate; vinyl aromatic monomers, such as styrene; vinyl cyanides, such as acrylonitrile; unsaturated acids and anhydrides, such as acrylic acid; and, (meth)acrylamides. The polymer or copolymer used in the shell may possess acid groups that are cross-linked ionically through metal carboxylate formation, in particular through forming salts of divalent metal cations. The shell polymer or copolymer may also be covalently cross-linked by monomers having two or more double bonds per molecule.

It is preferred that any included core-shell rubber particles have a mean volume particle size (Dv50) of from 10nm to 300nm, for example from 50 nm to 250 nm: said particle size refers to the diameter or largest dimension of a particle in a distribution of particles and is measured via laser diffraction. For completeness, the present application does not preclude the presence of two or more types of core shell rubber (CSR) particles with different particle size distributions in the composition to provide a balance of key properties of the resultant cured product, including shear strength, peel strength and resin fracture toughness.

The core-shell rubber may be selected from commercially available products, examples of which include: Paraloid EXL 2650A, EXL 2655 and EXL2691 A, available from The Dow Chemical Company; Clearstrength^{®} XT100, available from Arkema Inc.; the Kane Ace^{®} MX series available from Kaneka Corporation, and in particular MX 120, MX 125, MX 130, MX 136, MX 551, MX553; and, METABLEN SX-006 available from Mitsubishi Rayon.

A *"plasticizer"* for the purposes of this invention is a substance that decreases the viscosity of the composition and thus facilitates its processability. Herein the plasticizer may constitute up to 10 wt.% or up to 5 wt.%, based on the total weight of the composition, and is preferably selected from the group consisting of: diurethanes; ethers of monofunctional, linear or branched C4-C16 alcohols, such as Cetiol OE (obtainable from Cognis Deutschland GmbH, Düsseldorf); esters of abietic acid, butyric acid, thiobutyric acid, acetic acid, propionic acid esters and citric acid; esters based on nitrocellulose and polyvinyl acetate; fatty acid esters; dicarboxylic acid esters; esters of OH-group-carrying or epoxidized fatty acids; glycolic acid esters; benzoic acid esters; phosphoric acid esters; sulfonic acid esters; trimellitic acid esters; polyether plasticizers, such as end-capped polyethylene or polypropylene glycols; polystyrene; hydrocarbon plasticizers; chlorinated paraffin; and, mixtures thereof. It is noted that, in principle, phthalic acid esters can be used as the plasticizer but these are not preferred due to their toxicological potential.

*"Stabilizers"* for purposes of this invention are to be understood as antioxidants, UV stabilizers, thermal stabilizers or hydrolysis stabilizers. Herein stabilizers may constitute *in toto* up to 10 wt.% or up to 5 wt.%, based on the total weight of the composition. Standard commercial examples of stabilizers suitable for use herein include: sterically hindered phenols; thioethers; benzotriazoles; benzophenones; benzoates; cyanoacrylates; acrylates; amines of the hindered amine light stabilizer (HALS) type; phosphorus; sulfur; and, mixtures thereof.

Exemplary adhesion promoters having utility in the present composition, either alone or in combination, include: γ-aminopropyltrimethoxysilane; γ-aminopropyltriethoxysilane; N-(β-aminoethyl)-γ-aminopropyltrimethoxysilane; N-(β-aminoethyl)-γ-aminopropyltriethoxysilane; bis(γ-trimethoxysilylpropylamine); γ-ureidopropyltrimethoxysilane; 4-amino-3,3-dimethylbutyltrimethoxysilane; 4-amino-3,3-dimethylbutylmethyldimethoxysilane; N-ethyl-γ-aminoisobutyltrimethoxysilane; γ-methacryloxypropyltrimethoxysilane; γ-methacryloxypropyltriethoxysilane; γ-methacrylamidopropyltrimethoxysilane; and, γ-methacryloxypropyltriisopropoxysilane. Where adhesion promoting compounds possess (meth)acrylate or amine groups, the compounds contribute respectively to the relevant amount of ingredients b) and c) given above. In such circumstances, and as determined by the functionality of the compounds concerned, the adhesion promoting compounds should constitute less than 10 wt.%, for instance less than 5 wt.% of either the total weight of ethylenically unsaturated compounds in the composition or the total weight of amine functional compounds in the composition.

It is noted that compounds having metal chelating properties may be used in the compositions of the present disclosure to help enhance the adhesion of the cured composition to a substrate surface.

Further, also suitable for use as adhesion promoters are the acetoacetate-functionalized modifying resins sold by King Industries under the trade name K-FLEX XM-B301.

In order to enhance shelf life even further, it is often advisable to further stabilize the compositions of the present disclosure with respect to moisture penetration through using drying agents. A need also occasionally exists to lower the viscosity of the compositions for specific applications, by using reactive diluent(s). The total amount of reactive diluents present will typically be from 0 to 15 wt.%, for example from 0 to 5 wt.%, based on the total weight of the composition.

The presence of solvents and non-reactive diluents in the compositions of the present invention is also not precluded where this can usefully moderate the viscosities thereof. For instance, but for illustration only, the compositions may contain one or more of: xylene; 2-methoxyethanol; dimethoxyethanol; 2-ethoxyethanol; 2-propoxyethanol; 2-isopropoxyethanol; 2-butoxyethanol; 2-phenoxyethanol; 2-benzyloxyethanol; benzyl alcohol; ethylene glycol; ethylene glycol dimethyl ether; ethylene glycol diethyl ether; ethylene glycol dibutyl ether; ethylene glycol diphenyl ether; diethylene glycol; diethylene glycol-monomethyl ether; diethylene glycol-monoethyl ether; diethylene glycol-mono-n-butyl ether; diethylene glycol dimethyl ether; diethylene glycol diethyl ether; diethylene glycoldi-n-butylyl ether; propylene glycol butyl ether; propylene glycol phenyl ether; dipropylene glycol; dipropylene glycol monomethyl ether; dipropylene glycol dimethyl ether; dipropylene glycoldi-n-butyl ether; N-methylpyrrolidone; diphenylmethane; diisopropylnaphthalene; petroleum fractions such as Solvesso^{®} products (available from Exxon); alkylphenols, such as tert-butylphenol, nonylphenol, dodecylphenol and 8,11,14-pentadecatrienylphenol; styrenated phenol; bisphenols; aromatic hydrocarbon resins especially those containing phenol groups, such as ethoxylated or propoxylated phenols; adipates; sebacates; phthalates; benzoates; organic phosphoric or sulfonic acid esters; and sulfonamides.

The above aside, it is preferred that said non-reactive diluents constitute *in toto* less than 10 wt.%, in particular less than 5 wt.% or less than 2 wt.%, based on the total weight of the composition.

### METHODS AND APPLICATIONS

To form the defined two component (2K) curable compositions, the reactive components are brought together and mixed in such a manner as to induce the hardening thereof. The reactive compounds should be mixed under sufficient shear forces to yield a homogeneous mixture. It is considered that this can be achieved without special conditions or special equipment. That said, suitable mixing devices might include: static mixing devices; magnetic stir bar apparatuses; wire whisk devices; augers; batch mixers; planetary mixers; C.W. Brabender or Banburry^{®} style mixers; and, high shear mixers, such as blade-style blenders and rotary impellers.

For small-scale applications in which volumes of less than 2 liters will generally be used, the preferred packaging for the two components (2K) compositions will be side-by-side double cartridges or coaxial cartridges, in which two tubular chambers - typically of equal volume - are arranged alongside one another or inside one another and are sealed with pistons: the driving of these pistons allows the parts to be extruded from the cartridge, advantageously through a closely mounted static or dynamic mixer. For larger volume applications, the two components of the composition may advantageously be stored in drums or pails: in this case the two components are extruded via hydraulic presses, in particular by way of follower plates, and are supplied via pipelines to a mixing apparatus which can ensure fine and highly homogeneous mixing of the two components. In any event, for any package, it is important that the components be disposed with an airtight and moisture-tight seal, so that both components can be stored for a long time, ideally for 12 months or longer.

Non-limiting examples of two component dispensing apparatuses and methods that may be suitable for the present invention include those described in U.S. Patent No. 6,129,244 and US Patent No. 8,313,006.

The first and second components of the composition will conventionally be mixed in amounts by weight which achieve the desired ratio of (meth)acrylate groups to amine hydrogen atoms. By way of example, the ratio by weight of said first component to said second component may be in the range from 4:1 to 1:4, preferably from 3:1 to 1:1, for example from 5:2 to 1:1.

Where applicable, the two component (2K) curable compositions should broadly be formulated to exhibit an initial viscosity - determined immediately after mixing, for example, up to two minutes after mixing - of less than 200000 mPa s, for instance less than 100000 mPa.s, at 25°C. Independently of or additional to said viscosity characteristics, the two component (2K) composition should be formulated to be bubble (foam) free upon mixing and subsequent curing.

In accordance with the broadest process aspects of the present invention, the above described compositions are applied to a substrate and then cured *in situ.* Prior to applying the compositions, it is often advisable to pre-treat the relevant surfaces of the substrate to remove foreign matter therefrom: this step can, if applicable, facilitate the subsequent adhesion of the compositions thereto. Such treatments are known in the art and can be performed in a single or multi-stage manner constituted by, for instance, the use of one or more of: an etching treatment with an acid suitable for the substrate and optionally an oxidizing agent; sonication; plasma treatment, including chemical plasma treatment, corona treatment, atmospheric plasma treatment and flame plasma treatment; immersion in a waterborne alkaline degreasing bath; treatment with a waterborne cleaning emulsion; treatment with a cleaning solvent, such as acetone, carbon tetrachloride or trichloroethylene; and, water rinsing, preferably with deionized or demineralized water. In those instances where a waterborne alkaline degreasing bath is used, any of the degreasing agent remaining on the surface should desirably be removed by rinsing the substrate surface with deionized or demineralized water.

In some embodiments, the adhesion of the compositions of the present disclosure to the preferably pre-treated substrate may be facilitated by the application of a primer thereto. Indeed primer compositions may be necessary to ensure efficacious fixture and / or cure times of the compositions on inactive substrates. Whilst the skilled artisan will be able to select an appropriate primer, instructive references for the choice of primer include but are not limited to: US Patent No. 3,855,040 ; US Patent No. 4,731,146 ; US Patent No. 4,990,281 ; US Patent No. 5,811,473 ; GB 2502554 ; and, US Patent No. 6,852,193 .

The compositions are then applied to the preferably pre-treated, optionally primed surfaces of the substrate by conventional application methods such as: dispensing or extrusion of the composition through one or more conduits, optionally under mixing; brushing; roll coating; knife coating; doctor-blade application; printing methods; and, spraying methods, including but not limited to air-atomized spray, air-assisted spray, airless spray and high-volume low-pressure spray.

The present disclosure also provides a method for bonding two substrates, said method comprising the steps of: a) applying the curable composition obtained after mixing of said first and second components onto the surface of a first substrate; b) bringing the first substrate into contact with a second substrate to interpose the composition between said first and second substrates; and, c) curing the interposed composition. Typically step b) and optionally step c) are performed under the application of pressure to the bonded structure.

In this method, it is recommended that the compositions be applied to the surface at a wet film thickness of from 10 to 500 µm. The application of thinner layers within this range is more economical and provides for a reduced likelihood of deleterious thick cured regions. However, great control must be exercised in applying thinner coatings or layers so as to avoid the formation of discontinuous cured films.

There is no particular intention to limit the temperature at which the curing of the applied curable compositions may actually be effected: for instance, the composition may simply be held at a given temperature - such as room temperature - for a sufficient duration to permit the curing reaction to reach completion. However, for practical purposes, the complete curing of the applied curable compositions should typically occur at a temperature in the range of from 60°C to 250°C, such as from 80°C to 200°C or from 90°C to 200°C: this elevated temperature may be applied for a duration of from 0.1 to 10 hours, such as from 1 to 8 hours or from 1 to 5 hours.

The curing temperature that is suitable depends on the specific compounds present and the desired curing rate and can be determined in the individual case by the skilled artisan, using simple preliminary tests if necessary. For instance, the progress of the Michael addition reaction at a given temperature may be monitored via IR spectroscopy or via Nuclear Magnetic Resonance (NMR) measurements based on the conversion of the C=C double bond that is conjugated to the carbonyl double bond of the (meth)acrylate compounds. That aside, curing at lower temperatures within the aforementioned ranges is advantageous as it obviates the requirement to substantially heat or cool the mixture from the usually prevailing ambient temperature. Where applicable, however, the temperature of the mixture formed from the respective parts of a two component (2K) composition may be raised above the mixing temperature and / or the application temperature using conventional means including microwave induction.

The following examples are illustrative of the present invention and are not intended to limit the scope of the invention in any way.

### EXAMPLES

The following annotations are applied to compounds and materials employed in the Examples:

| | |
|---|---|
| SR351: | Trimethylolpropane triacrylate, available from Sartomer. |
| Photomer 4172: | Pentaerythritol (5EO) tetraacrylate (PPTTA), available from IGM Resins. |
| Miramer M2372: | Liquid acrylate monomer, available from Miwon Specialty Chemical Co. Ltd. |
| GPX 801: | Conductive filler (*carbon black*)*,* available from Cabot Corporation. |
| Bis-AMEO: | Bis(3-triethoxysilylpropyl)amine, available from Evonik Industries as Dynasylan 1122. |
| Cab-o-sil M-5: | Fumed silica, available from Cabot Corporation. |
| Omya BLH: | Precipitated calcium carbonate, available from Shiraishi Omya GmbH. |
| Vestamin PACM: | 4,4'-methylenedi(cyclohexan-1-amine), available from Evonik Industries. |
| Jeffamine D230: | Polyether diamine having a weight average molecular weight of 230 g/mol. and an amine hydrogen equivalent weight of 60 g/eq., available from Huntsman. |
| Jeffamine T403: | Polyether triamine having a weight average molecular weight of 440 g/mol and an amine hydrogen equivalent weight of 81 g/eq., available from Huntsman. |
| PC 9134: | Polycarbonate material, available from Baiside. |
| PC/ABS C1200 HF: | Polycarbonate / ABS (acrylonitrile-butadiene-styrene) blended material, available from Baiside. |
| Kalix^{®} 9950: | Polyamide for structural components used in smart mobile electronic devices, available from Rocholl GmbH. |
| SUS 1.4301: | Stainless steel lap shear panels, available from Rocholl GmbH. |
| Alu 6016: | Aluminium lap shear panels, available from Rocholl GmbH. |

The following test methods have been used to characterize the formulations:
Initial Bond Strength, Tensile Lap Shear (TLS) Test: The substrates tested are provided in the Tables below. Each substrate was cut into 2.5 cm x 10 cm plates for tensile testing. The bond overlapping area for each plate was 2.5 cm x 1.0 cm (1" x 0.4") with a bond thickness of 100-200 microns. For the initial bonding operation, the applied adhesive compositions were cured in the overlapping region at 100°C for 300 minutes. Tensile lap shear (TLS) tests were then performed at room temperature based upon EN 1465:2009 (German version) *Adhesives* - *Determination of Tensile Lap-shear Strength of Bonded Assemblies.* The test specimens were placed in the grips of a universal testing machine and pulled at 10 mm/min until failure occurs. The grips used to secure the ends of the assembly were aligned so that the applied force was applied through the centerline of the specimen. The type of failure observed could be either adhesive - wherein the adhesive separates from one of the substrates - or cohesive wherein the adhesive ruptures within itself.

Glass Transition Temperature (Tg, °C): The glass transition temperature is the onset temperature at which the cured resin changes from a glassy (solid) state to a soft, rubbery state: it can be considered the point at which a measurable reduction in physical properties occurs resulting from exposure to elevated temperatures. Herein the glass transition temperature is determined by dynamic mechanical thermal analysis (DMTA) using a TA Instruments Q800 DMA. Cured samples of the compositions - having dimensions of length 20.0 mm, width 10.0 mm and thickness 1.0 mm - were evaluated at a temperature range between -80°C and 200 °C at a heating rate of 2 K/min. A oscillatory force having a frequency of 1 Hz was applied at a controlled strain (0.1%) to yield measures of stiffness and damping, reported as storage modulus (E') and tan delta (tan δ). The glass transition (T_{g}) is observed as a large drop in the storage modulus (E') when viewed on a log scale against a linear temperature scale: a concurrent peak in the tan delta (*tan δ*) is also seen.

Further Tensile Properties: The parameters Modulus of Elasticity (E, MPa), Yield Stress (σ, MPa) and Tensile Strain (ε, %) were measured at the stated temperature in accordance with DIN EN IO 527-2 (2012) *Tensile Properties of Plastic.*

### Example 1

The formulation of this Example is described in Table 1 herein below:

**Table 1**

| Ingredient | Percentage by Weight of Composition (wt.%) |
|---|---|
| 1^{st} Component | |
| SR351 | 25.80 |
| Bis-AMEO | 0.50 |
| Cab-o-sil M-5 | 1.70 |
| Omya BLH | 38.66 |

| 2^{nd} Component | |
|---|---|
| Vestamin PACM | 14.40 |
| Cab-o-sil M-5 | 0.80 |
| Omya BLH | 18.14 |

In preparing the first component, all constituent compounds were weighed and the mixture thereof homogenized in a speed mixer (2500 rpm, 2 minutes). In preparing the second component, all constituent compounds were mixed in a speed mixer (2500 rpm; 2 minutes). The first and second components were then admixed under agitation in a speed mixer (3500 rpm; 30 seconds).

The results of Lap Shear Testing based on the composition of Table 1 are documented in Table 2 herein below, from which Table it is evident that the exemplified composition can be employed to operably bond multiple substrates. In that Table, the uncertainty of a mean value is provided in parentheses, where applicable.

**Table 2**

| Substrate | Curing Condition | Lap Shear Strength (MPa) |
|---|---|---|
| SUS 1.4301 | 100°C, 2 hours | 13.4 (± 0.4) |
| SUS 1.4301 | 100°C, 5 hours | 28.0 (± 0.9) |
| Alu 6016 | 100°C, 5 hours | 19.1 (± 0.5) |
| Kalix 9950 | 100°C, 5 hours | 12.2 (± 0.5) |
| PC 9134 | 100°C, 5 hours | 5.8 (± 0.3) |
| PC/ABS C1200 HF | 100°C, 5 hours | 7.3 (± 0.4) |
| Glass | 100°C, 5 hours | 6.0 (± 0.3) |

The results of thermal and mechanical testing of the composition of Table 1 are documented in Table 3 herein below. The uncertainty of a mean value is provided in parentheses, where applicable.

**Table 3**

| Curing Condition | E (MPa) | σ ₘₐₓ (MPa) | ∈ₘₐₓ (%) | Glass Transition Temperature (Tg, °C) |
|---|---|---|---|---|
| 100°C, 5 hours | 95 (± 5) | 7.1 (± 0.4) | 13 (± 1) | 27 |

### Example 2

The formulation of this Example is described in Table 4 herein below:

**Table 4**

| Ingredient | Percentage by Weight of Composition (wt.%) |
|---|---|
| 1^{st} Component | |
| Miramer M2372 | 29.45 |
| Bis-AMEO | 0.50 |
| Cab-o-sil M-5 | 1.55 |
| Omya BLH | 35.17 |

| 2^{nd} Component | |
|---|---|
| Vestamin PACM | 10.75 |
| Cab-o-sil M-5 | 0.95 |
| Omya BLH | 21.63 |

In preparing the first component, all constituent compounds were weighed and the mixture thereof homogenized in a speed mixer (2500 rpm, 2 minutes). In preparing the second component, all constituent compounds were mixed in a speed mixer (2500 rpm; 2 minutes). The first and second components were then admixed under agitation in a speed mixer (3500 rpm; 30 seconds).

The results of Lap Shear Testing based on the composition of Table 4 are documented in Table 5 herein below, from which Table it is evident that the exemplified composition can be employed to operably bond multiple substrates. In that Table, the uncertainty of a mean value is provided in parentheses, where applicable.

**Table 5**

| Substrate | Curing Condition | Lap Shear Strength (MPa) |
|---|---|---|
| SUS 1.4301 | 100°C, 2 hours | 28.0 (± 0.6) |
| SUS 1.4301 | 100°C, 5 hours | 28.0 (± 0.2) |
| Alu 6016 | 100°C, 5 hours | 7.8 (± 0.7) |
| Kalix 9950 | 100°C, 5 hours | 5.2 (± 0.3) |
| PC 9134 | 100°C, 5 hours | 4.3 (± 0.2) |
| PC/ABS C1200 HF | 100°C, 5 hours | 8.3 (± 0.5) |
| Glass | 100°C, 5 hours | 4.6 (± 0.3) |

The results of thermal and mechanical testing of the composition of Table 4 are documented in Table 6 herein below. The uncertainty of a mean value is provided in parentheses, where applicable.

**Table 6**

| Curing Condition | E (MPa) | σ ₘₐₓ (MPa) | εₘₐₓ (%) | Glass Transition Temperature (Tg, °C) |
|---|---|---|---|---|
| 100°C, 5 hours | 7330 (± 600) | 37 (± 3) | 0.53 (± 0.01) | 43 |

### Example 3

The formulation of this Example is described in Table 7 herein below:

**Table 7**

| Ingredient | Percentage by Weight of Composition (wt.%) |
|---|---|
| 1^{st} Component | |
| Miramer M2372 | 25.73 |
| Bis-AMEO | 0.50 |
| Cab-o-sil M-5 | 1.70 |
| Omya BLH | 38.73 |

| 2^{nd} Component | |
|---|---|
| Jeffamine T403 | 14.47 |
| Cab-o-sil M-5 | 0.80 |
| Omya BLH | 18.07 |

In preparing the first component, all constituent compounds were weighed and the mixture thereof homogenized in a speed mixer (2500 rpm, 2 minutes). In preparing the second component, all constituent compounds were mixed in a speed mixer (2500 rpm; 2 minutes). The first and second components were then admixed under agitation in a speed mixer (3500 rpm; 30 seconds).

The results of Lap Shear Testing based on the composition of Table 7 are documented in Table 8 herein below, from which Table it is evident that the exemplified composition can be employed to operably bond multiple substrates. In that Table, the uncertainty of a mean value is provided in parentheses, where applicable.

**Table 8**

| Substrate | Curing Condition | Lap Shear Strength (MPa) |
|---|---|---|
| SUS 1.4301 | 100°C, 2 hours | 16.3 (± 0.5) |
| SUS 1.4301 | 100°C, 5 hours | 26.2 (± 0.5) |
| Alu 6016 | 100°C, 5 hours | 18.6 (± 0.2) |
| Kalix 9950 | 100°C, 5 hours | 14.5 (± 0.3) |
| PC 9134 | 100°C, 5 hours | 5.7 (± 0.7) |
| PC/ABS C1200 HF | 100°C, 5 hours | 7.4 (± 0.1) |
| Glass | 100°C, 5 hours | 5.9 (± 0.9) |

The results of thermal and mechanical testing of the composition of Table 7 are documented in Table 9 herein below. The uncertainty of a mean value is provided in parentheses, where applicable.

**Table 9**

| Curing Condition | E (MPa) | σ ₘₐₓ (MPa) | εₘₐₓ (%) | Glass Transition Temperature (Tg, °C) |
|---|---|---|---|---|
| 100°C, 5 hours | 136 (± 6) | 7.3 (± 0.7) | 14 (± 2) | 22 |

### Example 4

The formulation of this Example is described in Table 10 herein below:

**Table 10**

| Ingredient | Percentage by Weight of Composition (wt.%) |
|---|---|
| 1^{st} Component | |
| Miramer M2372 | 28.38 |
| Bis-AMEO | 0.50 |
| Cab-o-sil M-5 | 1.59 |
| Omya BLH | 36.19 |

| 2^{nd} Component | |
|---|---|
| Jeffamine D230 | 11.82 |
| Cab-o-sil M-5 | 0.91 |
| Omya BLH | 20.61 |

In preparing the first component, all constituent compounds were weighed and the mixture thereof homogenized in a speed mixer (2500 rpm, 2 minutes). In preparing the second component, all constituent compounds were mixed in a speed mixer (2500 rpm; 2 minutes). The first and second components were then admixed under agitation in a speed mixer (3500 rpm; 30 seconds).

The results of Lap Shear Testing based on the composition of Table 10 are documented in Table 11 herein below. The uncertainty of a mean value is provided in parentheses, where applicable.

**Table 11**

| Substrate | Curing Condition | Lap Shear Strength (MPa) |
|---|---|---|
| SUS 1.4301 | 100°C, 2 hours | 9.4 (± 0.5) |
| SUS 1.4301 | 100°C, 5 hours | 18.7 (± 0.5) |

The results of thermal and mechanical testing of the composition of Table 10 are documented in Table 12 herein below. The uncertainty of a mean value is provided in parentheses, where applicable.

**Table 12**

| Curing Condition | E (MPa) | σ ₘₐₓ (MPa) | εₘₐₓ (%) | Glass Transition Temperature (Tg, °C) |
|---|---|---|---|---|
| 100°C, 5 hours | 73 (± 3) | 6.2 (± 0.2) | 17.2 (± 0.2) | 16 |

### Example 5

The formulation of this Example is described in Table 13 herein below:

**Table 13**

| Ingredient | Percentage by Weight of Composition (wt.%) |
|---|---|
| 1^{st} Component | |
| Photomer 4172 | 28.51 |
| Bis-AMEO | 0.50 |
| Cab-o-sil M-5 | 1.59 |
| Omya BLH | 36.07 |

| 2^{nd} Component | |
|---|---|
| Vestamin PACM | 11.69 |
| Cab-o-sil M-5 | 0.91 |
| Omya BLH | 20.73 |

In preparing the first component, all constituent compounds were weighed and the mixture thereof homogenized in a speed mixer (2500 rpm, 2 minutes). In preparing the second component, all constituent compounds were mixed in a speed mixer (2500 rpm; 2 minutes). The first and second components were then admixed under agitation in a speed mixer (3500 rpm; 30 seconds).

The results of Lap Shear Testing based on the composition of Table 13 are documented in Table 14 herein below. The uncertainty of a mean value is provided in parentheses, where applicable.

**Table 14**

| Substrate | Curing Condition | Lap Shear Strength (MPa) |
|---|---|---|
| SUS 1.4301 | 100°C, 2 hours | 5.1 (± 0.1) |
| SUS 1.4301 | 100°C, 5 hours | 9.1 (± 0.9) |

The results of thermal and mechanical testing of the composition of Table 13 are documented in Table 15 herein below. The uncertainty of a mean value is provided in parentheses, where applicable.

**Table 15**

| Curing Condition | E (MPa) | σₘₐₓ (MPa) | ∈ₘₐₓ (%) | Glass Transition Temperature (Tg, °C) |
|---|---|---|---|---|
| 100°C, 5 hours | 38 (± 1) | 3.2 (± 0.2) | 17 (± 3) | 4 |

In view of the foregoing description and examples, it will be apparent to those skilled in the art that equivalent modifications thereof can be made without departing from the scope of the claims.

## Claims

1. A two-component (2K) curable composition comprising:
a first component comprising:
a) at least one compound having at least two (meth)acrylate groups and having a weight average molecular weight (Mw) of at most 600 Daltons; and,
optionally b) at least one ethylenically unsaturated compound which is distinct from said compound(s) of a); and,
a second component comprising:
c) at least one compound having at least one primary amine group,
wherein the two-component (2K) composition further comprises:
d) a rheology control agent comprising electrically non-conductive fillers, electrically conductive fillers or mixtures thereof; and,
further wherein the two-component (2K) composition is **characterized in that** the molar ratio of (meth)acrylate groups to primary amine groups is from 3:1 to 1:1.

2. The composition according to claim 1 comprising, based on the weight of the composition:
a first component comprising:
from 20 to 50 wt.%, preferably from 20 to 45 wt.% of a) said at least one compound having at least two (meth)acrylate groups and having a weight average molecular weight (Mw) of at most 600 Daltons; and,
from 0 to 10 wt.%, preferably from 0 to 5 wt.%, of b) said at least one ethylenically unsaturated compounds distinct from said compound(s) of a); and,
a second component comprising:
c) at least one compound having at least one primary amine group,
wherein the two-component (2K) composition further comprises:
from 10 to 60 wt.%, preferably from 15 to 60 wt.% of d) a rheology control agent comprising: electrically non-conductive fillers, electrically conductive fillers or mixtures thereof; and,
further wherein the two-component (2K) composition is **characterized in that** the molar ratio of (meth)acrylate groups to primary amine groups is 2:1 to 1:1, preferably from 1.8:1 to 1.2:1.

3. The composition according to claim 1 or claim 2, wherein the or each (meth)acrylate compound of a) has a weight average molecular weight (Mw) of at most 550 Daltons, preferably at most 500 Daltons.

4. The composition according to any one of claims 1 to 3, wherein the or each (meth)acrylate compound of a) has a dynamic viscosity of from 1 to 400 mPa.s, preferably from 1 to 300 mPa.s, as determined at 25°C and at a shear rate of 100s⁻¹.

5. The composition according to any one of claims 1 to 4, wherein the or each compound of a) has at least two acrylate groups.

6. The composition according to any one of claims 1 to 5, wherein a) comprises at least one compound chosen from tris(2-hydroxyethyl) isocyanurate triacrylate (THEICTA), tris(2-hydroxyethyl) isocyanurate trimethacrylate, tris(3-hydroxypropyl) isocyanurate triacrylate, tris(3-hydroxypropyl) isocyanurate trimethacrylate and mixtures thereof.

7. The composition according to any one of claims 1 to 6, wherein a) comprises trimethylolpropane triacrylate (TMPTA) and / or pentaerythritol triacrylate (PETIA).

8. The composition according to any one of claims 1 to 7, wherein the or each primary amine compound of c) has an amine hydrogen equivalent weight of at most 125 g/eq., preferably at most 100 g/eq, more preferably at most 90 g/eq.

9. The composition according to any one of claims 1 to 8, wherein c) comprises bis(4-aminocyclohexyl)methane (PACM).

10. The composition according to any one of claims 1 to 9, wherein c) comprises a polyoxyalkylenediamine, a polyoxyalkylenetriamine or a mixture thereof.

11. The composition according to any one of claims 1 to 10, wherein d) comprises a non-conductive filler chosen from: calcium carbonate; calcium oxide; calcium metasilicate; talcum; fumed silica; silica; barium sulphate; and, mixtures thereof.

12. A method for bonding two substrates, said method comprising the steps of:
i) applying the composition as defined in any one of claims 1 to 11 to the surface of a first substrate;
ii) bringing the first substrate into contact with a second substrate to interpose the composition between said first and second substrates; and,
iii) curing the interposed composition.

13. The method according to claim 12, wherein in step i) said composition is applied to the surface at a wet film thickness of from 10 to 500 µm.

14. The method according to claim 12 or claim 13, wherein said curing step iii) comprises heating the interposed composition at a temperature of from 60°C to 250°C for a duration of from 0.1 to 10 hours.

15. The bonded structure obtained according to the method as defined in any one of claims 12 to 14.
